# FASCICULE DE BREVET EUROPEEN

(11) **EP 0 950 551 B1**
(45) Date de publication et mention de la délivrance du brevet: **24.08.2005**
(21) Numéro de dépôt: 99400949.6
(22) Date de dépôt: 19.04.1999
(51) Int. Cl.: B60D 1/14, B60D 1/48

(54) **Agencement de traverse surbaissée pour accouplement d'une remorque sur un véhicule tracteur**
Tiefliegendes Querelement zum Verbinden eines Zugfahrzeuges mit einem Anhänger
Low-positioned cross-member for connecting a towing vehicle to a trailer

(30) Priorité: 17.04.1998 FR 9804863
(43) Date de publication de la demande: 20.10.1999
(73) Titulaire: POMMIER & CIE, 95310 Saint Ouen L'Aumone (FR)
(72) Inventeur: Froissard, Alain, 95110 Sannois (FR)
(74) Mandataire: Berger, Helmut

(56) Documents cités:
- DE-U- 7 320 517
- DE-U- 8 901 811
- DE-U- 29 606 636
- DE-U- 29 616 145
- US-A- 5 716 066

## Description

L'invention concerne un agencement de traverse surbaissée pour l'accouplement d'une remorque sur un véhicule tracteur, du type monté sur le cadre du véhicule par l'intermédiaire de joues extérieures verticales prévues aux extrémités du dispositif de traverse.

De tels agencements de traverse surbaissée sont connus des documents DE-U-296 16 145, DE-U-732 05 17 et DE-U-296 06 636.

Le document DE-U-296 16 145 décrit un agencement de traverse surbaissée pour recevoir un accouplement d'une remorque. Selon cet agencement, la traverse est montée sur le cadre du véhicule par l'intermédiaire de joues extérieures ayant la fonction d'adapteur de la longueur de la traverse. La traverse est réalisée sous la forme d'un profilé en C. Et les éléments adapteurs de longueur sont réalisés sous la forme de profilés en C ou en U et montés télescopiquement sur les extrémités opposées de la traverse.

Le document DE-U-732 05 17 décrit un agencement de traverse surbaissée pour accouplement d'une remorque à un véhicule tracteur. La traverse est réalisée sous la forme d'un profilé creux dont les extrémités opposées sont pourvues de profilés d'extrémité montés de manière télescopique pour pouvoir adapter la longueur de la traverse au cadre du véhicule. Les profilés d'extrémité sont fixés par rapport à la traverse moyennant des boulons.

Le document DE-U-296 06636 décrit un agencement de traverse surbaissé selon lequel la traverse est réalisée sous la forme d'un profilé en U dont les deux extrémités opposées sont pourvues de joues extérieures. Les joues extérieures sont des profilés en S avec une partie montant en biais de la traverse vers le cadre du véhicule. La longueur effective de la traverse est adaptée par la forme précise des joues extérieures.

Dans chacun des trois documents cités ci-avant, les traverses sont formées essentiellement par un profilé unique dont la stabilité, notamment sous l'influence de forces de torsion pendant l'utilisation du véhicule, est limitée.

Des agencements de traverse de ce type présentent par ailleurs l'inconvénient qu'il faut réaliser pour chaque type de véhicule d'une largeur de cadre différente un agencement de traverse spécifique. Or, en raison des exigences concernant la sécurité, la structure de ces agencements est relativement complexe. Par conséquent, un fournisseur d'agencements de traverse adaptés à différents types de véhicule se voit donc confronté à des prix de revient relativement importants. A cet inconvénient s'ajoute encore celui du stockage des agencements.

La présente invention a pour but de proposer un agencement de traverse qui pallie les inconvénients qui viennent d'être énoncés.

Pour atteindre ce but, l'invention propose un agencement de traverse selon la revendication 1.

Selon une autre caractéristique avantageuse de l'invention, les flasques de fixation sont réalisés sous forme de profilés en U dont les branches viennent en prise au-dessus et en dessous des branches du U de la poutre et dont la base en appui sur la face extérieure desdites extrémités recourbées sert pour la fixation auxdites joues de montage.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemples illustrant un mode de réalisation de l'invention et sur lesquels
- la figure 1 est une vue en perspective d'un agencement de traverse abaissée selon la présente invention;
- la figure 2 est une vue en élévation de l'agencement selon la figure 1;
- la figure 3 est une vue en coupe le long de la ligne III-III de la figure 2 ;
- la figure 4 est une vue en coupe le long de la ligne IV-IV de la figure 2.

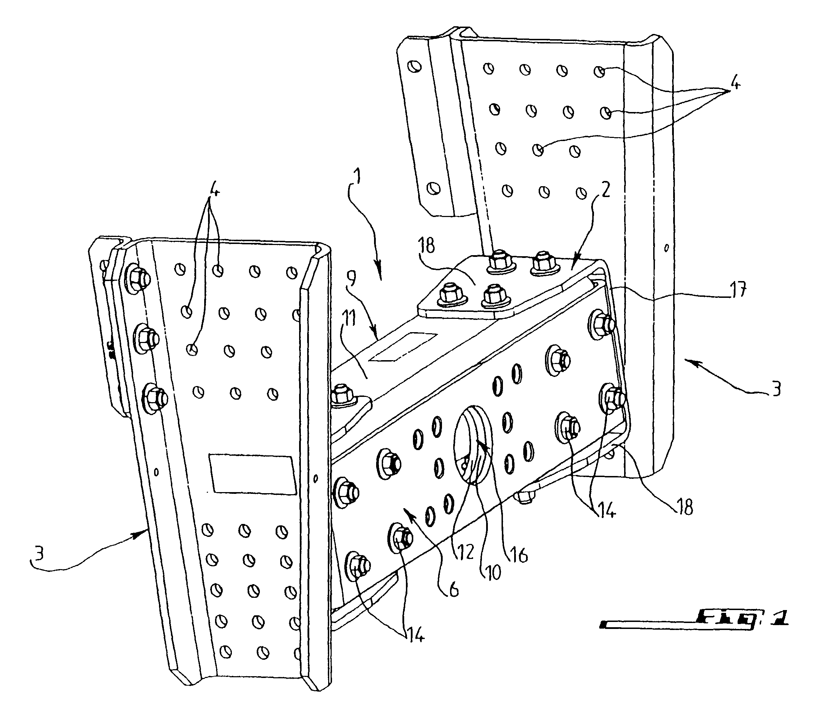

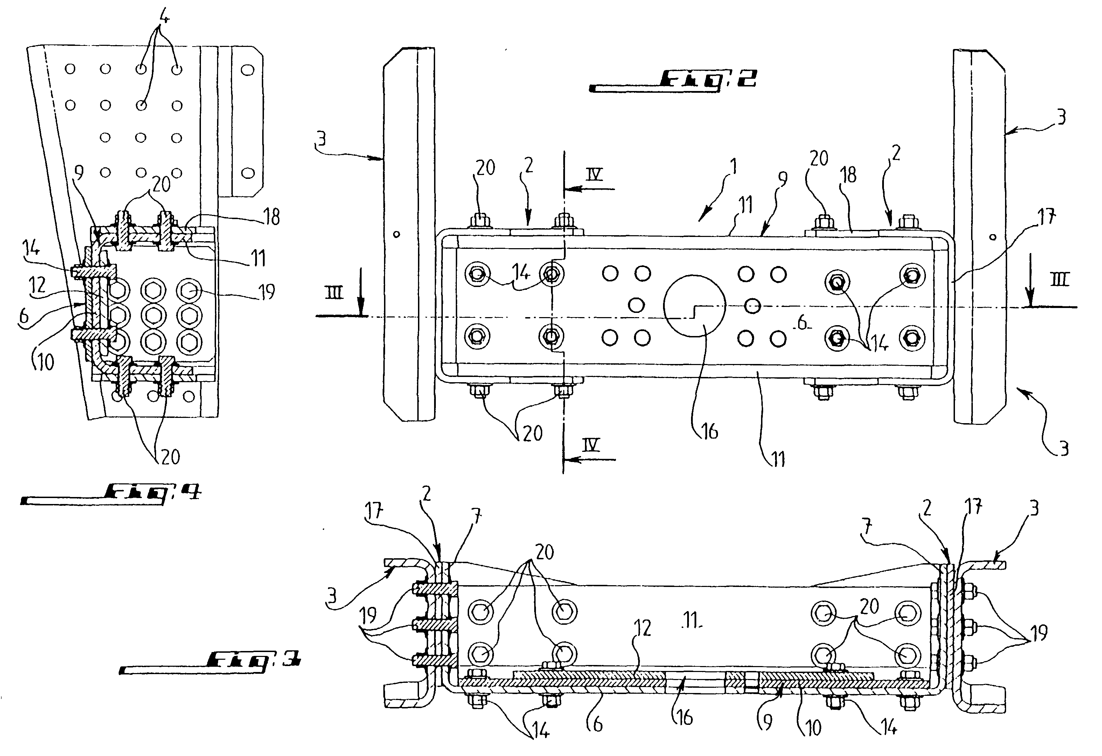

Conformément aux figures, l'agencement de traverse abaissée selon l'invention comporte une partie de poutre 1 présentant un profil en U et, à chaque extrémité de la poutre, un flasque 2 de fixation à la partie inférieure d'une joue 3 de montage sur le châssis ou cadre non représenté du véhicule. Les trous permettant le montage sur le cadre se trouvent dans la partie supérieure des joues et sont indiqués en 4.

La poutre 1 se compose de plusieurs éléments, à savoir d'un élément plan extérieur 6 dont les extrémités 7 sont perpendiculairement recourbées vers l'arrière, c'est-à-dire dans la direction opposée à celle allant vers la remorque, et un deuxième élément de poutre 9 qui est profilé en U et fixé par sa base 10 sur la face arrière interne de l'élément plan 6, les ailes constituant alors les parois supérieure et inférieure de la poutre 1. La base de la poutre est encore renforcée par un élément en forme d'une plaque 12 fixée sur la face interne de la base 10 de l'élément en U 9.

Les éléments qui constituent la base renforcée de la poutre de traverse 1, à savoir l'élément extérieur 6, la base 9 de l'élément en U et l'élément de renforcement 12 sont reliés par des moyens d'assemblage par boulonnage 14. Pour permettre le passage du crochet d'attelage, la base renforcée de la poutre comporte un orifice circulaire indiqué en 16.

Chacun des flasques de fixation 2 est également profilé en U et monté sur l'extrémité de la poutre 1, avec ses branches 18 venant en prise au-dessus et en dessous des parois supérieur et inférieur de la poutre, formées par les ailes 11, avec la base 17 interposée entre la joue correspondante 3 et la partie recourbée correspondante 7. La fixation se fait par boulonnage 20. Ces deux parties et la base des flasques sont solidarisées entre elles et des joues 3 par des moyens de fixation par boulonnage 19, les boulons traversant chaque partie, base et joues correspondantes.

De la description de l'agencement de traverse, qui vient d'être faite, ressort que celui-ci présente une structure modulaire dont certaines parties, à savoir les flasques 2 peuvent être utilisées sans changement de forme et de dimensions pour différents types de traverse adaptés à différentes largeurs de cadre de véhicule. Seulement la partie de poutre proprement dite 1 doit être modifiée en longueur. Cette adaptation est encore rendue plus aisée par le fait que l'un des éléments de la poutre est un profilé en U qui peut être facilement découpé d'un tronçon de plus grande longueur.

Cette structure modulaire présente l'avantage supplémentaire qu'elle permet la réalisation d'une configuration dans laquelle des surépaisseurs et parties renforcées s'obtiennent par simple superposition de plusieurs couches de matière lors de l'assemblage.

Il est encore à noter que l'assemblage par boulons ou vis à écrous permet de solidariser plus de deux éléments comme par exemple les parties recourbées 7 de l'élément 6, les bases des flasques 2 et les joues 3. La possibilité d'assembler plus de deux épaisseurs permet de réaliser une structure de poutre de la rigidité souhaitée. Ainsi, l'invention propose une poutre dont la base est formée par superposition de deux éléments qui sont tous les deux assemblés aux flasques. La poutre selon l'invention a ainsi la forme générale d'un caisson renforcé qui est seulement ouvert au côté opposé à la face de base comportant l'ouverture 16. On constate ainsi que l'assemblage par boulons est non seulement avantageux en lui-même mais permet encore d'obtenir une structure de poutre ayant des propriétés mécaniques souhaitées.

## Revendications

1. Agencement de traverse surbaissée pour accouplement d'une remorque à un véhicule tracteur, du type monté sur le cadre du véhicule par l'intermédiaire de joues extérieures (3) verticales prévues aux extrémités du dispositif de traverse, l'agencement de traverse présentant une structure modulaire avec une poutre de traverse (1) et, à chaque extrémité de la poutre de traverse (1), un flasque (2) de fixation à la joue correspondante (3) de montage sur le cadre du véhicule, la poutre de traverse (1) comprenant un élément profilé en U (9) dont la base (10) qui contient une ouverture (16) de passage pour un crochet d'attelage est renforcée, **caractérisé en ce que** la poutre de traverse (1) comprend une base (6, 10) formée par superposition de deux éléments, à savoir la base (10) de l'élément profilé en U (9) et un élément extérieur plane (6) et des ailes qui (11) constituent les branches du profilé en U (9) et que les extrémités (7) recourbées de l'élément plane (6), qui sont orientées dans les directions des ailes (11) de l'élément profilé (9), sont assemblées aux flasques (2) de fixation.

2. Agencement selon la revendication 1, **caractérisé en ce que** chacun des flasques (2) de fixation comprend des ailes (18) et une base (17), les flasques de fixation (2) venant en prise au-dessus et en dessous des branches (11) du U de la poutre (1) par leurs ailes (18), la base (17) venant en appui sur la face extérieure desdites extrémités recourbées (7) de l'élément plane (6), pour fixer les extrémités (7) recourbées auxdites joues de montage (3).

3. Agencement selon la revendication 1 ou 2, **caractérisé en ce que** la poutre de traverse (1) comprend des boulons (14), pour l'assemblage des éléments (6, 9) constitutifs de la poutre et pour l'assemblage des flasques (2) aux joues (3).

4. Agencement selon la revendication 3, **caractérisé en ce que** l'élément plan (6) par ses extrémités recourbées est solidarisé aux flasques (2) et aux joues par des boulons (19) les traversant.

5. Agencement selon la revendicatin 3 ou 4, **caractérisé en ce que** l'élément profilé en U (9) est fixé aux flasques par des boulons (20).

## Patentansprüche

1. Tiefliegendes Querelement zum Verbinden eines Zugfahrzeugs mit einem Anhänger, vom Typ eines auf dem Rahmen des Fahrzeugs mit Hilfe von senkrechten, an den Ende der Quervorrichtung vorgesehenen Außenwangen (3) befestigten Elements, wobei das Querelement eine Modularstruktur aufweist mit einem Querträger (1) und, an jedem Ende des Querträgers (1), einem Flansch (2) zur Befestigung an der entsprechenden Montagewange (3) am Fahrzeugrahmen, wobei der Querträger (1) ein U-Profilelement (9) umfasst, dessen Basis (10), die eine Öffnung (16) hat, um einen Kuppelhaken hindurchzuführen, verstärkt ist, **dadurch gekennzeichnet, dass** der Querträger (1) eine Basis (6, 10) umfasst, die durch Übereinanderschichtung von zwei Elementen gebildet wird, nämlich der Basis (10) des U-Profilelements (9) und einem ebenen Außenelement (6), und Flügel (11), die die Schenkel des U-Profils (9) bilden, und **dadurch**, dass die gebogenen Enden (7) des ebenen Elements (6), die in Richtung der Flügel (11) des Profilelements (9) ausgerichtet sind, an den Befestigungsflanschen (2) befestigt sind.

2. Element nach Anspruch 1, **dadurch gekennzeichnet, dass** jeder der Befestigungsflansche (2) Flügel (18) und eine Basis (17) umfasst, wobei die Befestigungsflansche (2) die Schenkel (11) des Us des Trägers (1) mittels ihrer Flügel (18) oben und unten umfassen, wobei die Basis (17) an der Außenseite der besagten gebogenen Enden (7) des ebenen Elements (6) anliegt, um die gebogenen Enden (7) an den besagten Montagewangen (3) zu befestigen.

3. Element nach Anspruch 1 oder 2, **dadurch gekennzeichnet, dass** der Querträger (1) Schraubenbolzen (14) umfasst, um die Bestandteile (6, 9) des Trägers zusammenzufügen und um die Flansche (2) an den Wangen (3) zu befestigen.

4. Element nach Anspruch 3, **dadurch gekennzeichnet, dass** das ebene Bauteil (6) an seinen gebogenen Enden mit Schraubenbolzen (19) mit den Flanschen (2) und den Wangen verbunden ist, die diese durchqueren.

5. Element nach Anspruch 3 oder 4, **dadurch gekennzeichnet, dass** das U-Profilelement (9) mit Schraubenbolzen (20) an den Flanschen befestigt ist.

## Claims

1. A low-positioned cross-member layout for connecting a trailer to a towing vehicle, of the type mounted on the frame of the vehicle via vertical external cheeks (3) provided at the ends of the cross-member device, the cross-member layout having a modular structure with a cross bar (1) and at each end of the cross bar (1), a flange for attachment to the corresponding mounting cheek (3) on the frame of the vehicle, the cross bar (1) comprising a component with a U-profile (9), the base (10) of which containing a port (16) for the passage of a towing hook, is reinforced, **characterized in that** the cross bar (1) comprises a base (6, 10) formed by superimposing two components, i.e. the base (10) of the component with a U-profile (9) and a planar external component (6) and wings (11) which form the branches of the component with a U-profile and that the curved ends (7) of the planar component, which are turned in the directions of the wings (11) of the profiled component (9), are assembled at the attachment flanges (2).

2. The layout according to claim 1, **characterized in that** each of the attachment flanges (2) comprises wings (18) and a base (17), the attachment flanges (2) engaging above and below the branches (11) of the U of the bar (1) with their wings (18), the base (17) pressing against the external face of said curved ends (7) of the planar component to attach the curved ends (7) to said mounting cheeks (3)

3. The layout according to claim 1 or 2, **characterized in that** the cross bar (1) comprises bolts (14) for assembling the constitutive components (6, 9) of the bar and for assembling the flanges (2) to the cheeks.

4. The layout according to claim 3, **characterized in that** the planar component (6) is permanently attached by its ends to the flanges (2) and to the cheeks by bolts (19) which pass through them.

5. The layout according to claim 3 or 4, **characterized in that** the component with a U-profile (9) is attached to the flanges by bolts (20).
